# EUROPEAN PATENT SPECIFICATION

(11) **EP 1 719 256 B1**
(45) Date of publication and mention of the grant of the patent: **27.02.2008**
(21) Application number: 05705418.1
(22) Date of filing: 11.01.2005
(51) Int. Cl.: H04B 1/69, H04Q 7/36, H04B 7/04

(54) **INCREASED ULTRA WIDEBAND (UWB) USER CAPACITY TRANSMITTER UTILIZING BEAM FORMING**
SENDER MIT VERGRÖSSERTER ULTRABREITBAND-(UWB-)BENUTZERKAPAZITÄT UNTER VERWENDUNG VON STRAHLFORMUNG
EMETTEUR A BANDE ULTRA-LARGE A CAPACITE UTILISATEUR AUGMENTEE PAR FORMATION DE FAISCEAU

(30) Priority: 04.02.2004 US 773072
(43) Date of publication of application: 08.11.2006
(73) Proprietor: Northrop Grumman Corporation, Los Angeles, CA 90067-2199 (US)
(72) Inventor: TOLAND, B., Northrop Grumman Corp., Los Angeles, CA 90067-2199 (US); ALLEN, B.R., Northrop Grumman Corp., Los Angeles, CA 90067-2199 (US); FISHER, G.R., Northrop Grumman Corp., Los Angeles, CA 90067-2199 (US)
(74) Representative: Kinsler, Maureen Catherine
(86) International application number: PCT/US2005/000743
(87) International publication number: WO 2005/081421

(56) References cited:
- WO-A-03/044968
- US-A- 5 907 816
- US-A1- 2003 090 435

## Description

### BACKGROUND OF THE INVENTION

The present invention relates generally to communication systems using ultra wideband (UWB) pulses and, more particularly, to techniques for increasing user capacity in UWB transmitters. Communication by UWB pulses, sometimes referred to as impulse radio communication, is a known but not widely used technique. The term "impulse radio" is generally used to describe UWB systems in which there is no carrier signal contained within the pulses. The term UWB may also be applied to systems in which the transmitted pulses are bursts of a radio frequency carrier signal. An extremely narrow electromagnetic pulse inherently contains a wide band of frequencies. Adding information to a stream of UWB pulses may be effected by pulse position modulation, wherein the instantaneous value of an information signal sample is used to modulate the position in time of a UWB pulse. At a more fundamental level, UWB pulses may also be modulated by their presence or absence in an otherwise periodic train of pulses. These principles are known in the technical literature and are conveniently summarized in US Patent No. 5,677,927, issued to Fullerton et al.

Because UWB communication utilizes a large band of the frequency spectrum, it offers the advantages of security and resistance to jamming. Because UWB communication utilizes bandwidth inefficiently, governmental authorization of its use has been limited to relatively low powers. UWB communication still offers the advantages of a relatively long range, the ability to penetrate walls of buildings, and low transceiver cost. However, communication by UWB pulses has some practical limitations, such as the difficulties inherent in applying the technique to multiple users. For example, one possible application of UWB communication systems is for supplying Internet and television connection to homes, as an alternative to coaxial cable, optical fiber cable, or satellite dish communication. UWB communication is ideal for this purpose because it permits the transmission of information at high data rates, using relatively low cost transceivers and processors at user sites. One inherent shortcoming of UWB communication systems, however, is that they allow only one user to receive unique information during any chosen time interval, The Fullerton et al. patent (US Patent No. 5,677,927) teaches the use of subcarriers of different frequencies or different waveforms to add channelization to impulse radio signals used in UWB transmission.

An analogous technique for providing multiple user access to communication systems is code division multiple access (CDMA), as used in mobile telephone systems. Multiple users of a CDMA system share the same frequency band and may transmit at the same time, but their information signals are distinguishable because each user is associated with a different code used for spectrum spreading. The codes are said to be orthogonal, i.e., in theory they are independently detectable in a receiver. Thus, in CDMA systems multiple information signal channels share a single spread-spectrum transmission system. Applying some form of CDMA to UWB transmission would, however, increase the complexity and cost of the modulation and detection equipment. It will be appreciated from the foregoing that there is still a need for a relatively simple approach for sharing UWB transmission systems among multiple users. The present invention is directed to this end.

WO 03/044 968 discloses a multi-element UWB antenna for beam forming, with the ability of steering UWB pulses to an intended receiver.

### BRIEF SUMMARY OF THE INVENTION

The present invention resides in apparatus, and a related method, for directing selected ultra wideband (UWB) pulses to multiple users of a UWB communication system. Briefly, and in general terms the apparatus of the invention comprises a wideband antenna structure having multiple arrays configured symmetrically, each array having multiple antenna elements; and means for separating UWB pulses into individual user streams of pulses and applying each user stream to the antenna structure in such a way as to generate individual user beams containing only pulses intended for those respective users. In accordance with one aspect of the invention the pulses are separated into individual user streams by assigning to each user a particular allocation of UWB time slots. In the simplest form of the apparatus, the UWB pulses are directed to different users by applying each user stream to a different segment of the antenna.

More specifically, separating UWB pulses into individual user streams is effected by assigning to each user a unique combination of a UWB frequency and an antenna array, whereby the UWB pulses transmitted to or from particular users are all uniquely identifiable and any user may receive or transmit UWB pulses at the same time as other users, without significant interference. Spatial separation of user beams is further enhanced by the use of a plurality of beam forming networks, each associated with a separate one of the multiple antenna arrays, and each comprising a plurality of variable time delay circuits. The time delay circuits interpose different sets of selected time delays for UWB pulses applied to the successive array elements, to direct different pulses along beam paths to respective users. Beam steering signals are used to control the beam forming networks, to switch them in such a way as to effect beam steering toward selected users served by each antenna array.

In accordance with another important aspect of the invention, UWB pulses for each of the users have a carrier frequency selected from a plurality of available frequencies, and the frequencies are reused in a spatial sequence such that the beam associated with any user is spatially separated as far as possible from the nearest user beam using the same frequency.

It will be appreciated from the foregoing that the present invention provides a significant advance in the field of UWB communication systems. In particular, the invention allows UWB pulses to be directed to selected multiple users, using a selected combination of spatial beam separation, temporal separation and frequency reuse. Other aspects and advantages of the invention will become apparent from the following more detailed description, taken in conjunction with the accompanying drawings.

### BRIEF DESCRIPTION OF THE DRAWINGS

Fig. 1 is a diagrammatic view of a UWB antenna with separate arrays mounted on respective faces of a polygonal structure.

Fig. 2 is a diagrammatic view of a UWB antenna array employing beam steering for spatial separation of different user signals.

Fig. 3 is a representative timing diagram illustrating time slot reuse in a UWB communication system.

Fig. 4 is a diagrammatic view of a multi-faceted UWB antenna configuration employing frequency reuse to enhance signal separation for multiple users.

### DETAILED DESCRIPTION OF THE INVENTION

As shown in the drawings for purposes of illustration, the present invention pertains to techniques for sharing an ultra wideband (UWB) communication system among multiple users. For example, the users may be home owners having a need for delivery of wideband communication data from television or Internet service providers without using underground coaxial cables, optical fiber cables, or satellite dish antennas.

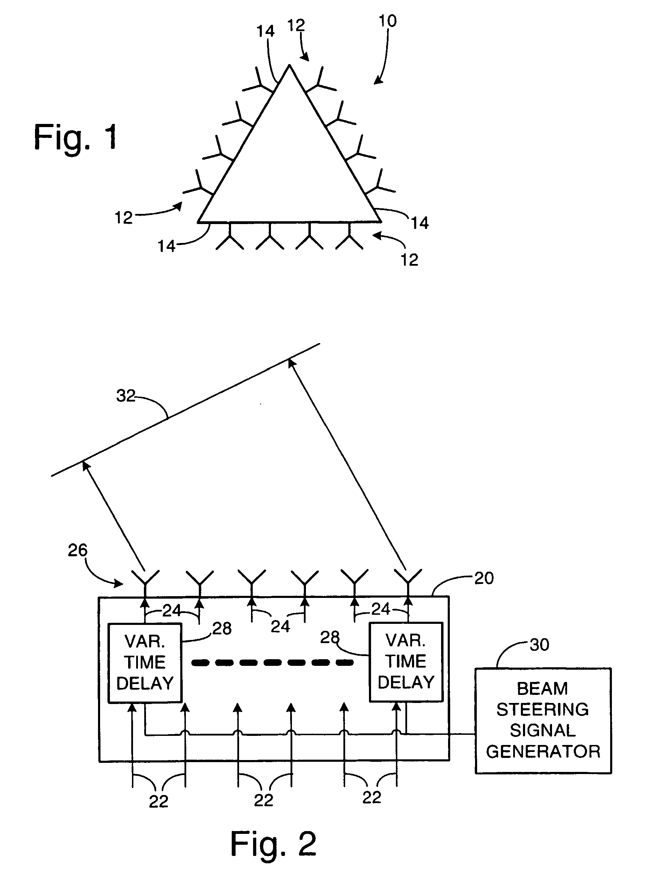

In accordance with one aspect of the invention, a centrally located UWB transmitting/receiving system includes a wideband antenna that provides for multiple, spatially separated antenna beams, each directed toward a separate user antenna. This multiple beam wideband antenna allows multiple UWB user channels to be spatially interleaved within a given time period. For example, as shown in Fig. 1, the multiple beam antenna, indicated generally by reference numeral 10, includes multiple antenna arrays 12 located on multiple faces 14 that form a polygon when viewed from above. In the illustrative antenna, there are three antenna arrays 12 located on three faces 14 that form a triangle in plan view. More generally, there may be N antenna arrays 12 installed on N faces 14 that form an N-sided polygon in plan view, allowing N separate transmission paths to separate users of the system.

Further spatial separation can be obtained by use of an analog or digital beam forming network 20 (Fig. 2.), the concept of which is analogous to the principle of a phased array antenna. In beam forming for UWB transmission, UWB pulses are applied to all input terminals 22 of the beam forming network 20. Output terminals 24 are connected to respective elements of an n-element antenna array 26. The beam forming network 20 functions to interpose time delays, two of which are shown at 28, selectively in the respective signal paths. The time delays 28 are controlled by a beam steering signal generator 30, which applies an incrementally greater delay to each successive input signal. For example, if the interposed time delays were all equal, UWB pulses would be applied in synchronism to all elements of the array 26. When an appropriate delay is applied to the UWB pulse transmitted to each successive element of the array 26, an electromagnetic pulse will be transmitted in a desired direction from the antenna array, as indicated by the wavefront 32. By digitally switching time delays in and out of the beam forming network 20, different selected pulses can be directed along different paths from the antenna array 26.

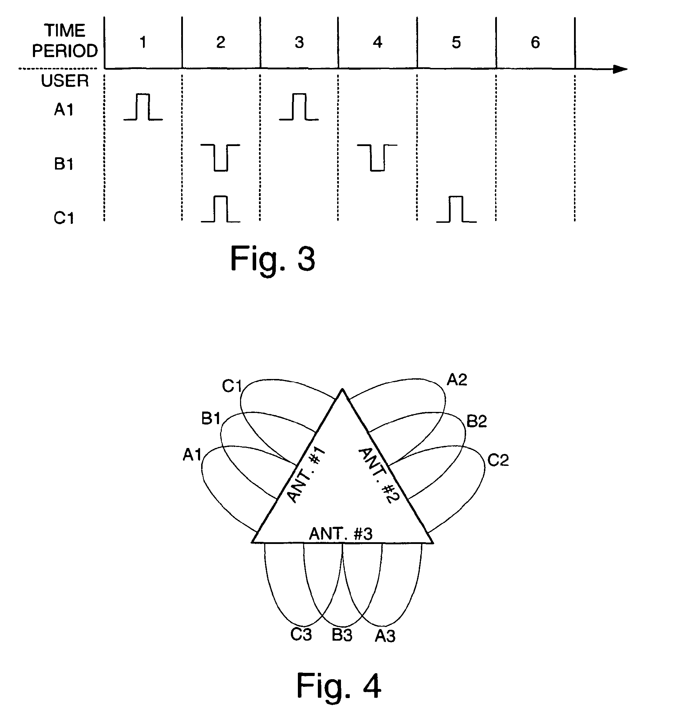

In addition to spatially multiplexing pulses, time multiplexing can be used. Fig. 3 is an example of time slot reuse to associate users with particular pulses. In the example, user A1 is associated with pulses in time slots #1 and #3 and user B1 is associated with negative-going pulses in time slots #2 and #4. User C1 is associated with positive-going pulses in time slots #2 and #5. Other arrangements are, of course, within the scope of the invention.

Instead of time reuse to identify particular pulses as being associated with particular users, the system may employ frequency reuse to separate the users. As shown in Fig. 4, for example, a three-array antenna is designed to generate three spatially separated beams from each of its three arrays. Antenna array #1 generates three spatially separated beams to users A1, B1 and C1, antenna array #2 generates three spatially separated beams to users A2, B2 and C2, and antenna array #3 generates three spatially separated beams to users A3, B3 and C3. In accordance with the frequency reuse principle as used here, the beams directed to users A1, A2 and A3 use a first frequency. Likewise, the beams directed to users B1, B2 and B3 use a second frequency, and the beams directed to users C1, C2 and C3 use a third frequency. That is to say, the UWB pulses associated with users A1, A2 and A3 have a first carrier frequency, while the pulses associated with users B1, B2 and B3 have a second carrier frequency, and the pulses associated with users C1, C2 and C3 have a third carrier frequency. Using this configuration, pulses for all nine users may overlap in time because they are separated spatially and by frequency at the antenna arrays. On any one of the arrays, the pulses intended for, say, user B are distinguishable from the signals intended for users A and C, because there is both frequency separation and spatial separation of the beams generated for that particular array. Moreover, the pulses for users using the same frequency, such as users A1, A2 and A3, are spatially separated in that they use separate physical antenna arrays.

It will be appreciated from the foregoing that the present invention represents a significant advance in the field of UWB communication systems, by providing multiple user access to a single transmitter/receiver. In particular, by a selected combination of spatial separation, beam steering, frequency reuse and time slot reuse, the invention permits multiple users to communicate with a UWB transceiver with only minimal interference. Specific embodiments of the invention have been illustrated for purposes of illustration. The invention should not be limited except as by the appended claims.

## Claims

1. Apparatus adapted to be used in an ultra wideband (UWB) communication system and adapted to direct selected UWB pulses to and from selected multiple users, the apparatus comprising:
a wideband antenna structure (10) having multiple arrays (12), each array having multiple antenna elements (26); and
means for separating UWB pulses into individual user streams of pulses and applying each user stream to the antenna structure (10) in such a way as to generate individual user beams containing only pulses intended for those respective users.

2. Apparatus as defined in claim 1, wherein:
the means for separating UWB pulses into individual user streams comprises means for assigning to each user a particular allocation of UWB time slots.

3. Apparatus as defined in claim 1, wherein:
the means for separating UWB pulses into individual user streams comprises means for applying each user stream to a different segment (14) of the antenna.

4. Apparatus as defined in claim 1, wherein:
the means for separating UWB pulses into individual user streams comprises means tor assigning to each user a unique combination of a UWB frequency and an antenna array (12), whereby the UWB pulses transmitted to or from particular users are all uniquely identifiable and any user may receive or transmit UWB pulses at the same time as other users, without significant interference.

5. Apparatus as defined in claim 4, wherein the means for separating UWB pulses into user streams comprises:
a plurality of beam forming networks (20), each associated with a separate one of the multiple antenna arrays (12), and each comprising a plurality of variable time delay circuits (28), wherein the time delay circuits (28) interpose different sets of selected time delays for UWB pulses applied to the successive array elements (26), to direct different pulses along beam paths to respective users, and
means for generating beam steering signals to the beam forming networks (20), to switch the beam forming networks (20) to effect beam steering toward selected users served by each antenna array (12).

6. Apparatus as defined in claim 5, wherein:
each beam forming network (20) is switchable to direct beams to a plurality m of users associated with each antenna array (12);
the antenna structure (10) has n arrays (12), for a total of mn users;
UWB pulses for each of the mn users have a carrier frequency selected from a plurality of available frequencies; and
the frequencies are reused in a spatial sequence such that the beam associated with any user is spatially separated from other user beams using the same frequency.

7. A method for transmitting ultra wideband (UWB) pulses to selected multiple users, comprising the steps of:
separating UWB pulses into individual user streams of pulses; and
applying each user stream to a wideband antenna structure (10) having multiple arrays (12) of multiple antenna elements in such a way as to generate individual user beams containing only pulses intended for those respective users.

8. A method as defined in claim 7, wherein:
the step of separating UWB pulses comprises assigning each user a particular allocation of time slots in a stream of UWB pulses.

9. A method as defined in claim 7, wherein:
the step of separating UWB pulses comprises applying each user's pulses to a different segment (14) of the antenna structure.

10. A method as defined in claim 7, wherein:
the step of separating UWB pulses comprises assigning to each user a unique combination of a UWB frequency and an antenna array (12), whereby the UWB pulses transmitted to or from particular users are all uniquely identifiable and any user may receive or transmit UWB pulses at the same time as other users, without significant interference.

11. A method as defined in claim 10, wherein:
the step of separating UWB pulses comprises forming beams in a plurality of beam forming networks (20), each associated with a separate one of the multiple antenna arrays (12), wherein the step of forming beams includes interposing different sets of selected time delays for UWB pulses applied to the successive array elements, to direct different pulses along beam paths to respective users; and
the method further comprises generating beam steering signals to the beam forming networks (20), and thereby switching the beam forming networks (20) to effect beam steering toward selected users served by each antenna array (12).

12. A method as defined in claim 11, wherein:
the step of switching the beam forming network (20) functions to direct beams to a plurality (m) of users associated with each antenna array (12);
the antenna structure (10) has n arrays (12), for a total of mn users; and
the method further comprises selecting, for each of the mn users, a UWB carrier frequency from a plurality of available frequencies, and reusing the frequencies in a spatial sequence such that the beam associated with any user is spatially separated from other user beams using the same frequency.

## Patentansprüche

1. Vorrichtung, die für die Verwendung in einem Ultrabreitband-(UWB-)Kommunikationssystem eingerichtet ist und dafür eingerichtet ist, ausgewählte UWB-Impulse zu und von ausgewählten mehreren Teilnehmern zu richten, wobei die Vorrichtung umfaßt:
eine Breitband-Antennenstruktur (10) mit mehreren Anordnungen (12), wobei jede Anordnung mehrere Antennenelemente (26) aufweist; und
ein Mittel zum Trennen von UWB-Impulsen in individuelle Teilnehmerströme von Impulsen und Einspeisen jedes Teilnehmerstroms in die Antennenstruktur (10) auf eine solche Weise, daß individuelle Teilnehmerstrahlen erzeugt werden, die nur Impulse enthalten, die für diese jeweiligen Teilnehmer bestimmt sind.

2. Vorrichtung nach Anspruch 1, wobei:
das Mittel zum Trennen von UWB-Impulsen in individuelle Teilnehmerströme ein Mittel zum Zuweisen einer bestimmten Zuteilung von UWB-Zeitschlitzen an jeden Teilnehmer umfaßt.

3. Vorrichtung nach Anspruch 1, wobei:
das Mittel zum Trennen von UWB-Impulsen in individuelle Teilnehmerströme ein Mittel zum Einspeisen jedes Teilnehmerstroms in ein anderes Segment (14) der Antenne umfaßt.

4. Vorrichtung nach Anspruch 1, wobei:
das Mittel zum Trennen von UWB-Impulsen in individuelle Teilnehmerströme ein Mittel zum Zuweisen einer eindeutigen Kombination aus einer UWB-Frequenz und einer Antennenanordnung (12) an jeden Teilnehmer umfaßt, wodurch die UWB-Impulse, die zu oder von bestimmten Teilnehmern übertragen werden, allesamt eindeutig identifizierbar sind und jeder Teilnehmer UWB-Impulse zur gleichen Zeit wie andere Teilnehmer ohne erhebliche Störung empfangen oder senden kann.

5. Vorrichtung nach Anspruch 4, wobei das Mittel zum Trennen von UWB-Impulsen in Teilnehmerströme umfaßt:
eine Vielzahl von Strahlformungsnetzwerken (20), die jeweils einer getrennten der mehreren Antennenanordnungen (12) zugeordnet sind und jeweils eine Vielzahl von variablen Zeitverzögerungsschaltungen (28) umfassen, wobei die Zeitverzögerungsschaltungen (28) unterschiedliche Sätze ausgewählter Zeitverzögerungen für UWB-Impulse, die in die aufeinanderfolgenden Anordnungselemente (26) eingespeist werden, einschieben, um unterschiedliche Impulse entlang Strahlwegen aufjeweilige Teilnehmer zu richten; und
ein Mittel zur Erzeugung von Strahlschwenkungssignalen für die Strahlformungsnetzwerke (20), um die Strahlformungsnetzwerke (20) umzuschalten, um eine Strahlschwenkung zu ausgewählten Teilnehmern, die durch jede Antennenanordnung (12) versorgt werden, zu bewirken.

6. Vorrichtung nach Anspruch 5, wobei:
jedes Strahlformungsnetzwerk (20) umschaltbar ist, um Strahlen auf eine Vielzahl m von Teilnehmern, die jeder Antennenanordnung (12) zugeordnet sind, zu richten;
die Antennenstruktur (10) n Anordnungen (12) für insgesamt m·n Teilnehmer aufweist;
UWB-Impulse für jeden der m·n Teilnehmer eine aus einer Vielzahl von verfügbare Frequenzen ausgewählte Trägerfrequenz aufweisen; und
die Frequenzen in einer räumlichen Abfolge wiederverwendet werden, so daß der Strahl, der irgendeinem Teilnehmer zugeordnet ist, von anderen Teilnehmerstrahlen, welche die gleiche Frequenz verwenden, räumlich getrennt ist.

7. Verfahren zur Übertragung von Ultrabreitband-(UWB-)Impulsen zu ausgewählten mehreren Teilnehmern, umfassend die folgenden Schritte:
Trennen von UWB-Impulsen in individuelle Teilnehmerimpulsströme; und
Einspeisen jedes Teilnehmerstroms in eine Breitband-Antennenstruktur (10) mit mehreren Anordnungen (12) von mehreren Antennenelementen auf eine solche Weise, daß individuelle Teilnehmerstrahlen erzeugt werden, die nur Impulse enthalten, die für diese jeweiligen Teilnehmer bestimmt sind.

8. Verfahren nach Anspruch 7, wobei:
der Schritt des Trennens von UWB-Impulsen den folgenden Schritt umfaßt: Zuweisen einer bestimmten Zuteilung von Zeitschlitzen in einem Strom von UWB-Impulsen anjeden Teilnehmer.

9. Verfahren nach Anspruch 7, wobei:
der Schritt des Trennens von UWB-Impulsen den folgenden Schritt umfaßt: Einspeisen der Impulse jedes Teilnehmers in ein anderes Segment (14) der Antennenstruktur.

10. Verfahren nach Anspruch 7, wobei:
der Schritt des Trennens von UWB-Impulsen den folgenden Schritt umfaßt: Zuweisen einer eindeutigen Kombination aus einer UWB-Frequenz und einer Antennenanordnung (12) an jeden Teilnehmer, wodurch die UWB-Impulse, die zu oder von bestimmten Teilnehmern übertragen werden, allesamt eindeutig identifizierbar sind und jeder Teilnehmer UWB-Impulse zur gleichen Zeit wie andere Teilnehmer ohne erhebliche Störung empfangen oder senden kann.

11. Verfahren nach Anspruch 10, wobei:
der Schritt des Trennens von UWB-Impulsen den folgenden Schritt umfaßt: Formen von Strahlen in einer Vielzahl von Strahlformungsnetzwerken (20), die jeweils einer getrennten der mehreren Antennenanordnungen (12) zugeordnet sind, wobei der Schritt des Formens von Strahlen den folgenden Schritt aufweist: Einschieben unterschiedlicher Sätze ausgewählter Zeitverzögerungen für UWB-Impulse, die in die aufeinanderfolgenden Anordnungselemente eingespeist werden, um unterschiedliche Impulse entlang Strahlwegen auf jeweilige Teilnehmer zu richten; und
das Verfahren ferner den folgenden Schritt umfaßt: Erzeugen von Strahlschwenkungssignalen für die Strahlformungsnetzwerke (20) und dadurch Umschalten der Strahlformungsnetzwerke (20), um eine Strahlschwenkung zu ausgewählten Teilnehmern, die durch jede Antennenanordnung (12) versorgt werden, zu bewirken.

12. Verfahren nach Anspruch 11, wobei:
der Schritt des Umschalten der Strahlformungsnetzwerke (20) die Funktion hat, Strahlen auf eine Vielzahl m von Teilnehmern, die jeder Antennenanordnung (12) zugeordnet sind, zu richten;
die Antennenstruktur (10) n Anordnungen (12) für insgesamt m·n Teilnehmer aufweist; und
das Verfahren ferner den folgenden Schritt umfaßt: für jeden der m·n Teilnehmer, Auswählen einer UWB-Trägerfrequenz aus einer Vielzahl von verfügbaren Frequenzen und Wiederverwenden der Frequenzen in einer räumliche Abfolge, so daß der Strahl, der irgendeinem Teilnehmer zugeordnet ist, von anderen Teilnehmerstrahlen, welche die gleiche Frequenz verwenden, räumlich getrennt ist.

## Revendications

1. Appareil adapté pour être utilisé dans un système de communication à bande ultra large (UWB), et adapté pour diriger des impulsions UWB sélectionnées vers et à partir d'une pluralité d'utilisateurs, l'appareil comprenant:
une structure d'antenne à large bande (10) comprenant une pluralité d'ensembles (12), chaque ensemble comprenant une pluralité d'éléments d'antenne (26); et
un moyen pour séparer des impulsions UWB en des trains d'impulsions d'utilisateurs individuels, et appliquer chaque train d'impulsions utilisateur sur la structure d'antenne (10) de façon à générer des faisceaux d'utilisateurs individuels contenant uniquement des impulsions destinées à ces utilisateurs respectifs.

2. Appareil selon la revendication 1, dans lequel:
le moyen pour séparer des impulsions UWB en des trains d'impulsions d'utilisateurs individuels comprend des moyens pour attribuer à chaque utilisateur une allocation particulière de tranches de temps UWB.

3. Appareil selon la revendication 1, dans lequel:
le moyen pour séparer des impulsions UWB en des trains d'impulsions d'utilisateurs individuels comprend des moyens pour appliquer chaque train d'impulsions utilisateur sur un segment (14) différent de l'antenne.

4. Appareil selon la revendication 1, dans lequel:
le moyen pour séparer des impulsions UWB en des trains d'impulsions d'utilisateurs individuels comprend des moyens pour attribuer à chaque utilisateur une combinaison unique d'une fréquence UWB et d'un ensemble d'éléments d'antenne (12), moyennant quoi les impulsions UWB transmises vers ou à partir d'utilisateurs particuliers sont toutes identifiées de façon unique, et un utilisateur quelconque peut recevoir ou transmettre des impulsions UWB en même temps que d'autres utilisateurs, sans interférence significative.

5. Appareil selon la revendication 4, dans lequel le moyen pour séparer des impulsions UWB en des trains d'impulsions d'utilisateurs:
une pluralité de réseaux de formation de faisceau (20), qui sont chacun associés à un seul ensemble de la pluralité d'ensembles d'éléments d'antenne (12) et qui comprennent chacun une pluralité de circuits à retard de durée variable (28), dans lequel les circuits à retard (28) intercalent différents ensembles de retards sélectionnés pour des impulsions UWB appliquées sur des éléments d'ensembles successifs (26), de façon à diriger différentes impulsions le long de trajets de faisceaux vers des utilisateurs respectifs; et
des moyens pour générer des signaux de déplacement de faisceau en direction des réseaux de formation de faisceau (20), dans le but de commuter les réseaux de formation de faisceau (20) et les amener à effectuer un déplacement de faisceau vers des utilisateurs sélectionnés servis par chaque ensemble d'éléments d'antenne (12).

6. Appareil selon la revendication 5, dans lequel:
chaque réseau de formation de faisceau (20) peut être commuté de façon à diriger des faisceaux vers une pluralité m d'utilisateurs associée à chaque ensemble d'éléments d'antenne (12);
la structure d'antenne (10) a n ensembles (12), pour un total de mn utilisateurs;
des impulsions UWB pour chacun des mn utilisateurs ont une fréquence porteuse sélectionnée parmi une pluralité de fréquences disponibles; et
les fréquences sont réutilisées selon une séquence spatiale, de telle sorte que le faisceau associé à un utilisateur quelconque soit séparé spatialement d'autres faisceaux d'utilisateurs qui utilisent la même fréquence.

7. Procédé pour transmettre des impulsions à bande ultra large (UWB) vers une pluralité d'utilisateurs sélectionnés, comprenant les étapes consistant à:
séparer des impulsions UWB en des trains d'impulsions d'utilisateurs individuels; et
appliquer chaque train d'impulsions utilisateur sur une structure d'antenne à large bande (10) comprenant une pluralité d'ensembles (12) comprenant une pluralité d'éléments d'antenne, de façon à générer des faisceaux d'utilisateurs individuels contenant uniquement des impulsions destinées à ces utilisateurs respectifs.

8. Procédé selon la revendication 7, dans lequel:
l'étape de séparation d'impulsions UWB comprend l'étape consistant à attribuer à chaque utilisateur une allocation particulière de tranches de temps dans un train d'impulsions UWB.

9. Procédé selon la revendication 7, dans lequel:
l'étape de séparation d'impulsions UWB comprend l'étape consistant à appliquer les impulsions de chaque utilisateur sur un segment (14) différent de la structure d'antenne.

10. Procédé selon la revendication 7, dans lequel;
l'étape de séparation d'impulsions UWB comprend l'étape consistant à attribuer à chaque utilisateur une combinaison unique d'une fréquence UWB et d'un ensemble d'éléments d'antenne (12), moyennant quoi les impulsions UWB transmises vers ou à partir d'utilisateurs particuliers peuvent toutes être identifiées de façon unique, et un utilisateur quelconque peut recevoir ou transmettre des impulsions UWB en même temps que d'autres utilisateurs, sans interférence significative.

11. Procédé selon la revendication 10, dans lequel:
l'étape de séparation d'impulsions UWB comprend l'étape consistant à former des faisceaux dans une pluralité de réseaux de formation de faisceau (20), qui sont chacun associés à un seul ensemble de la pluralité d'ensembles d'éléments d'antenne (12), dans lequel l'étape de formation de faisceaux comprend l'étape consistant à intercaler différents ensembles de retards sélectionnés pour des impulsions UWB appliquées sur des éléments d'ensembles successifs, de façon à diriger différentes impulsions le long de trajets de faisceaux vers des utilisateurs respectifs; et
le procédé comprend par ailleurs les étapes consistant à générer des signaux de déplacement de faisceau en direction des réseaux de formation de faisceau (20), et à commuter de ce fait les réseaux de formation de faisceau (20) pour les amener à effectuer un déplacement de faisceau vers des utilisateurs sélectionnés servis par chaque ensemble d'éléments d'antenne (12).

12. Procédé selon la revendication 11, dans lequel:
l'étape de commutation du réseau de formation de faisceau (20) a pour fonction de diriger des faisceaux vers une pluralité m d'utilisateurs associée à chaque ensemble d'éléments d'antenne (12);
la structure d'antenne (10) a n ensembles (12), pour un total de mn utilisateurs; et
le procédé comprend par ailleurs les étapes consistant à sélectionner, pour chacun des mn utilisateurs, une fréquence porteuse UWB parmi une pluralité de fréquences disponibles, et à réutiliser les fréquences selon une séquence spatiale, de telle sorte que le faisceau associé à un utilisateur quelconque soit séparé spatialement d'autres faisceaux d'utilisateurs qui utilisent la même fréquence.
